# EUROPEAN PATENT SPECIFICATION

(11) **EP 1 568 025 B1**
(45) Date of publication and mention of the grant of the patent: **24.10.2007**
(21) Application number: 03811816.2
(22) Date of filing: 04.11.2003
(51) Int. Cl.: G11B 19/04, G11B 27/36, G11B 20/18

(54) **POWER FAILURE RECOVERY METHOD**
STROMVERSORGUNGSAUSFALL-WIEDERHERSTELLUNGSVERFAHREN
PROCEDE DE RECUPERATION EN CAS DE PANNE DE COURANT

(30) Priority: 27.11.2002 EP 02292939
(43) Date of publication of application: 31.08.2005
(73) Proprietor: Koninklijke Philips Electronics N.V., 5621 BA Eindhoven (NL)
(72) Inventor: KELLY, Declan Patrick, 75008 Paris (FR); TAN, Jingwei, 75008 Paris (FR); BLACQUIERE, Johannis Friso Rendert, Paris 75008 (FR)
(74) Representative: van Oudheusden-Perset, Laure E.
(86) International application number: PCT/IB2003/004990
(87) International publication number: WO 2004/049326

(56) References cited:
- WO-A-02/50829
- PATENT ABSTRACTS OF JAPAN vol. 2002, no. 04, 4 August 2002 (2002-08-04) & JP 2001 344872 A (RICOH CO LTD), 14 December 2001 (2001-12-14)
- PATENT ABSTRACTS OF JAPAN vol. 1999, no. 11, 30 September 1999 (1999-09-30) & JP 11 167787 A (AIWA CO LTD), 22 June 1999 (1999-06-22)
- PATENT ABSTRACTS OF JAPAN vol. 1996, no. 07, 31 July 1996 (1996-07-31) & JP 08 077749 A (YAMAHA CORP), 22 March 1996 (1996-03-22)
- PATENT ABSTRACTS OF JAPAN vol. 1995, no. 02, 31 March 1995 (1995-03-31) & JP 06 325473 A (SANYO ELECTRIC CO LTD), 25 November 1994 (1994-11-25)
- PATENT ABSTRACTS OF JAPAN vol. 012, no. 278 (P-738), 1 August 1988 (1988-08-01) & JP 63 056891 A (FANUC LTD), 11 March 1988 (1988-03-11)

## Description

### FIELD OF THE INVENTION

The present invention relates to a method of recording blocks of data on an optical record carrier. The present invention also relates to a method of recovering blocks of data recorded on an optical record carrier in case of a power failure affecting a recording and reproducing device containing said optical record carrier.

The present invention finally relates to a recording and reproducing device implementing such recording and power failure recovery methods.

This invention is particularly relevant for optical disc recorders.

### BACKGROUND OF THE INVENTION

In the era of videocassette recording, power failures were not a big problem, as everything that had been recorded until the power failure was recorded correctly and is available for the user.

With the introduction of optical discs for recording television broadcasts, this has changed as recordable optical disc standards make use of a data manager file. Said file is used to store the control information and multimedia objects for the title menu. Without the control information, the recorded multimedia data are not accessible to the user, and typically the control information is not written on disc until after the entire multimedia data have been recorded.

The international patent application n° WO 02/50829 describes a video disc recorder comprising a non-volatile random access memory, which is used to save status data corresponding to the state of the video recorder. During power up after an unexpected power failure, said non-volatile memory is used to determine whether or not the disc recorder was recording during the power failure, and the recorded multimedia data are recovered thanks to the use of status data saved in the non-volatile random access memory.

However, the recording state is stored in a non-volatile memory of a specific recorder. As a consequence, if the disc is inserted into another recorder, the recorded multimedia data cannot be recovered by said other recorder. Moreover, the recorder in accordance with the prior art only provides contiguous recording, which type of recording is not performed on all types of discs.

### SUMMARY OF THE INVENTION

It is an object of the invention to propose a recording method which is capable, in case of a power failure affecting a specific recording and reproducing device, of recovering data on another recording and reproducing device.

To this end, the recording method in accordance with the invention is characterized in that it comprises the steps of:
- writing a recording indication information on the optical record carrier to indicate that a recording has started, said recording indication information including a recording start address,
- overwriting the recording indication information at an end of recording.

After a power failure, the recording and reproducing device is able to determine that a recording has not ended properly if a recording indication information is present on the optical record carrier. In these conditions, said device is able to parse the recorded data, starting from the recording start address, in order to find the end of the improperly ended recording, and then to recover the complete recorded data. This is the case, for example, if the optical record carrier is a DVR+RW disc, for which the recording is contiguous.

In an embodiment of the invention, the recording method further comprises the step of writing a recovery header for each block recorded on the data carrier, the recovery header of a current block of data comprising a size of the current block and a location of a next block of data.

This is the case, for example, if the optical record carrier is a Blu-ray disc, for which the recording is not contiguous. In these conditions, the recording and reproducing device is able to go to the recording start address and to recover the location of a next block of recorded data from a recovery header of a current block, and then to follow the chain of links between blocks. Finally, said device is able to parse the last block of recorded data in order to find the end of the improperly ended recording.

The present invention also relates to a device for implementing the recording method in an integrated circuit, for example, by means of items of hardware or software.

### BRIEF DESCRIPTION OF THE DRAWINGS

The present invention will now be described in more detail, by way of example, with reference to the accompanying drawings, wherein:
- Fig. 1 is a block diagram of a recording and reproducing device in accordance with the invention,
- Fig. 2 is a block diagram showing the recording method in accordance with the invention, and
- Fig. 3 is a block diagram showing the power failure recovery method in accordance with the invention.

### DETAILED DESCRIPTION OF THE INVENTION

The present invention relates to method of recovering recorded data on an optical record carrier in case of a power failure affecting a recording and reproducing device containing said optical record carrier.

In our example, the recording and reproducing device is a home optical disc recorder or a personal computer optical disc recorder, and the optical record carrier is a DVD or a Blu-ray disc. Nevertheless, it will be apparent to a person skilled in the art that the present invention is not limited to said discs. The scope of the present invention generally covers any medium having any physical disc format (e.g. CD, DVD, Blu-ray disc, etc.), which are recordable or rewritable.

The common idea between DVD+R or DVD+RW discs and Blu-ray discs is that the optical recorder is able to write information on the disc in order to indicate that the previous recording has not finished properly. This allows the recorder to know that it has to perform a recovery action.

Moreover, once the optical recorder has determined that an optical disc needs to be recovered, it has to find on the optical disc the recorded data that make up the unfinished recording, and hence needs to determine the start point of the recording. So the information indicating that the previous recording has not finished properly must contain a recording start point.

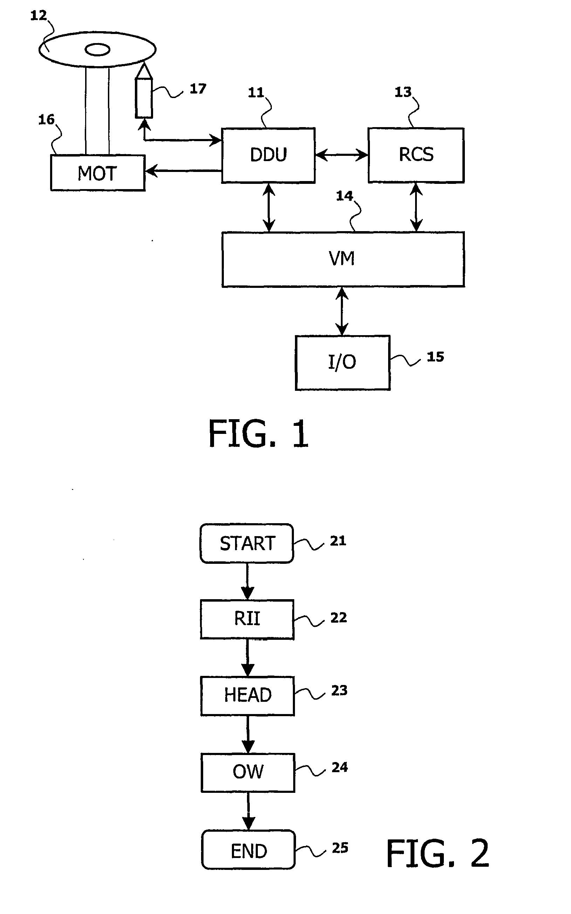

According to Fig. 1, the optical disc recorder comprises a disc drive unit DDU (11) for recording on and reproducing from an optical disc (12) by using a laser beam (17) applied to the optical disc. The disc drive unit is arranged to control a spindle motor MOT (16) that rotates the optical disc. Furthermore, a volatile memory VM (14) such as a static or dynamic Random Access Memory RAM is provided for storing data which have been reproduced from the optical disc or which are to be recorded on the optical disc. The volatile memory is connected to an Input/Output interface I/O (15) for inputting and outputting recorded data and reproduced data, respectively. Particularly, said interface may be a standard interface such as a Small Computer System Interface SCSI. According to the invention, a recovery control section RCS (13), which may be arranged as a separate unit or which may be implemented in a system processor section, is provided for controlling the disc drive unit so as to achieve a power failure recovery method. The recovery control section is connected to the optical disc via the disc drive unit, said optical disc containing the recovery control information required after a power failure.

Fig. 2 is a block diagram illustrating the recording method in accordance with the invention, wherein the following steps, which are taken during the recording, render possible a recovery of the data recorded before the power failure.
- At the start of recording (21), the recorder writes (22) a recording indication information on the optical disc to indicate that a recording has started, said information including the start address of the recording.
   In an embodiment of the invention, the recorder writes the recording indication information only after writing some arbitrary amount of video data on disc. This embodiment has the advantage that the recorder can start recording immediately, a retrieval of video data after a power failure being only a problem if there is a certain amount of video data on disc.
   In another embodiment, the recorder writes the recording indication information in the private data area of the recorder on disc. Said embodiment has the advantage that non-compliant data are not written in the data area of the disc.
   Still in another embodiment, the video recorder incorporates Universal Disc Format UDF knowledge, and then uses the Logical Volume Integrity Descriptor LVID as the recording indication information. When this descriptor is set and the file system information on disc has an integrity problem, the conclusion is that a recording has not ended correctly.
   Still in another embodiment, the recording indication information, including the recording start address, is stored in a separate recovery file on disc. All recorders of the same company may use the same name for the recovery file in order to be all able to recover the data recorded on disc. Another option is to update the corresponding standard to indicate the recovery file name so as to ensure that all recorders compatible with said standard are able to recover the data recorded on disc.
- For each block recorded on the optical disc, the recorder writes (23) a recovery header in a private data stream, for example an MPEG-2 private stream.
   The recovery header is inserted, for example, at the start of a data block. But the recovery headers are not necessarily aligned with the data blocks written on disc. This may be useful if the video recorder writes a single contiguous block on disc in a number of writes.
   Said recovery header contains the size of the current block. It also contains a pointer to indicate the location of the next block, the video recorder comprising means for choosing the location to write a next data block before it begins writing the current data block. It may include a write sequence number. Said write sequence number is a counter for the current recording, which is used to ensure that the next recovery header belongs to the same recording in case the system does not get time to write the next recovery header. The recovery header may also include a record reference number. This is a randomly generated number used to ensure that segments from different recordings can be told apart.
   The step of writing a recovery header is applicable to Blu-ray discs, for which recorded data are fragmented in blocks so the recorder needs to take further action to recover said data.
   This step is not necessary for DVD+RW discs because the recording is contiguous and, as a consequence, each recording can be considered as a single block of data. Although said step is not needed for DVD+RW discs, it can nevertheless be applied to said type of discs.
- At the end of recording (25), the recorder overwrites (24) the recording indication information to indicate that a recovery is not necessary.

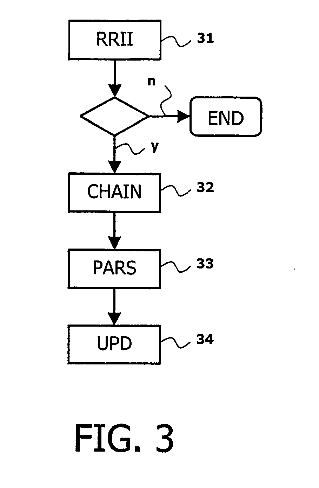

   Fig. 3 is a block diagram illustrating the power failure recovery method in accordance with the invention, the following steps being taken, for example, on power up of the recorder that was initially recording or directly on another recorder.
- The recorder is first able to read RRII (31) if a recording indication information is written on the optical disc, and more especially the recording start address, in order to see if a recovery is necessary.
- If a recovery is necessary, the recorder comprises means CHAIN (32) for going to the recording start address and for following the chain of pointers to recover locations of data written. The last recorded block is then detected because the pointer to said last block does not correspond to a consistent recovery header, i.e. a header comprising at least the size of the current block and the location of the next block.
   This step is not needed for a DVD+RW disc, as data recorded on said disc are contiguous.
   So, once the recorder has found the start point, it can parse the whole recorded data to find the end point. This step can nevertheless be applied to a DVD+RW disc if said disc comprises recovery headers.
- Then, the recorder is able to parse PARS (33) the contents of the last recorded block to find the end of the improperly ended recording. In a particular embodiment, this end is found by an Error Correction Code ECC block that cannot be decoded. In another embodiment, it is found from a discontinuity in the MPEG-2 data.
- Once the recorded data have been recovered, the recording is optionally resumed, and the file system and other navigation data is updated UPD (34) to include the new recording.

The two above-described methods can be implemented in a recorder in several manners, such as by means of items of hardware, for example, wired electronic circuits or, alternatively, by means of software, i.e. a set of instructions stored, for example, in a programming memory, said instructions replacing at least part of said circuits and being executable under the control of a digital processor in order to carry out the same functions as fulfilled in said replaced circuits. For example, it is possible to implement the recording method using an integrated circuit, which is suitably programmed. The set of instructions contained in the programming memory may cause the integrated circuit to carry out the different steps of one of the two methods. The set of instructions may be loaded into the programming memory by reading a storage unit. The set of instructions may also be made available by a service provider via a communication network such as, for example, the Internet.

Any reference sign in the following claims should not be construed as limiting the claim. It will be obvious that the use of the verb "to comprise" and its conjugations does not exclude the presence of any other steps or elements besides those defined in any claim. The word "a" or "an" preceding an element or step does not exclude the presence of a plurality of such elements or steps.

## Claims

1. A method of recording blocks of data on an optical record carrier, said method comprising the steps of:
- writing a recording indication information on the optical record carrier to indicate that a recording has started, said recording indication information including a recording start address, and
- overwriting the recording indication information at an end of recording.

2. A recording method as claimed in claim 1, further comprising the step of writing a recovery header for each block recorded on the data carrier, the recovery header of a current block of data comprising a size of the current block and a location of a next block of data.

3. A recording method as claimed in claim 2, wherein the recovery header is written in a private data stream.

4. A recording method as claimed in claim 1, wherein the recording indication information is written in a private data area of the record carrier.

5. A recording method as claimed in claim 1, wherein the recording indication information comprises a logical volume integrity descriptor.

6. A recording method as claimed in claim 1, wherein the recording indication information is stored in a recovery file on disc.

7. A method of recovering blocks of data recorded on an optical record carrier in case of a power failure affecting a recording and reproducing device containing said optical record carrier, said method comprising the steps of:
- reading a recording indication information on the optical record carrier, said information indicating that a recording has been improperly stopped and including a recording start address, and
- parsing recorded data starting from the recording start address in order to find a recording end point in a last recorded data block.

8. A power failure recovery method as claimed in claim 7, further comprising the steps of:
- reading, on the optical record carrier, a recovery header associated with a recorded data block, and
- recovering a content of a current recorded data block and a location of a next recorded data block from a current block size and a next block pointer contained in the recovery header.

9. A recording and/or reproducing device comprising:
- means for writing a recording indication information on the optical record carrier to indicate that a recording has started, said recording indication information including a recording start address,
- means for overwriting the recording indication information at an end of recording.

10. A recording and/or reproducing device comprising:
- means for reading a recording indication information on the optical record carrier, said recording indication information indicating that a recording has been improperly stopped and including a recording start address, and
- means for parsing recorded data starting from the recording start address in order to find a recording end point in a last recorded data block.

11. A computer program comprising program instructions for implementing a recording method as claimed in claim 1 when said program is executed by a processor.

12. A computer program comprising program instructions for implementing a power failure recovery method as claimed in claim 7 when said program is executed by a processor.

## Patentansprüche

1. Verfahren zum Aufzeichnen von Datenblöcken auf einem optischen Datenträger, wobei das Verfahren die folgenden Schritte umfasst:
- Schreiben einer Aufzeichnungsangabeinformation auf den optischen Datenträger, um anzugeben, dass eine Aufzeichnung begonnen hat, wobei die Aufzeichnungsangabeinformation eine Aufzeichnungsstartadresse umfasst, und
- Überschreiben der Aufzeichnungsangabeinformation an einem Aufzeichnungsende.

2. Aufzeichnungsverfahren nach Anspruch 1, ferner umfassend den Schritt des Schreibens eines Wiederherstellungs-Headers für jeden auf dem Datenträger aufgezeichneten Block, wobei der Wiederherstellungs-Header eines aktuellen Datenblocks eine Größe des aktuellen Blocks und einen Ort eines nächsten Datenblocks umfasst.

3. Aufzeichnungsverfahren nach Anspruch 2, wobei der Wiederherstellungs-Header in einen privaten Datenstrom geschrieben wird.

4. Aufzeichnungsverfahren nach Anspruch 1, wobei die Aufzeichnungsangabeinformation in einen privaten Datenbereich des Datenträgers geschrieben wird.

5. Aufzeichnungsverfahren nach Anspruch 1, wobei die Aufzeichnungsangabeinformation einen Logical Volume Integrity Descriptor umfasst.

6. Aufzeichnungsverfahren nach Anspruch 1, wobei die Aufzeichnungsangabeinformation in einer Wiederherstellungsdatei auf Disc gespeichert wird.

7. Verfahren zum Wiederherstellen von auf einem optischen Datenträger gespeicherten Datenblöcken im Fall eines Stromausfalls, der eine Aufzeichnungs- und Wiedergabevorrichtung, die diesen optischen Datenträger enthält, betrifft, wobei das Verfahren die folgenden Schritte umfasst:
- Lesen einer Aufzeichnungsangabeinformation auf dem optischen Datenträger, wobei die Information angibt, dass eine Aufzeichnung nicht ordnungsgemäß gestoppt wurde, und eine Aufzeichnungsstartadresse umfasst, und
- Parsen von aufgezeichneten Daten, beginnend von der Aufzeichnungsstartadresse, um einen Aufzeichnungsendpunkt in einem letzten aufgezeichneten Datenblock zu finden.

8. Stromausfallwiederherstellungsverfahren nach Anspruch 7, ferner umfassend die folgenden Schritte:
- Lesen, auf dem optischen Datenträger, eines Wiederherstellungs-Headers, der einem aufgezeichneten Datenblock zugeordnet ist, und
- Wiederherstellen eines Inhalts eines aktuellen aufgezeichneten Datenblocks und eines Orts eines nächsten aufgezeichneten Datenblocks aus einer Größe des aktuellen Blocks und einem Zeiger auf den nächsten Block, die in dem Wiederherstellungs-Header enthalten sind.

9. Aufzeichnungs- und/oder Wiedergabevorrichtung, umfassend:
- Mittel zum Schreiben einer Aufzeichnungsangabeinformation auf den optischen Datenträger, um anzugeben, dass eine Aufzeichnung begonnen hat, wobei die Aufzeichnungsangabeinformation eine Aufzeichnungsstartadresse umfasst,
- Mittel zum Überschreiben der Aufzeichnungsangabeinformation an einem Aufzeichnungsende.

10. Aufzeichnungs- und/oder Wiedergabevorrichtung, umfassend:
- Mittel zum Lesen einer Aufzeichnungsangabeinformation auf dem optischen Datenträger, wobei die Aufzeichnungsangabeinformation angibt, dass eine Aufzeichnung nicht ordnungsgemäß gestoppt wurde, und eine Aufzeichnungsstartadresse umfasst, und
- Mittel zum Parsen von aufgezeichneten Daten, beginnend bei der Aufzeichnungsstartadresse, um einen Aufzeichnungsendpunkt in einem letzten aufgezeichneten Datenblock zu finden.

11. Rechnerprogramm, umfassend Programmanweisungen zum Implementieren eines Aufzeichnungsverfahrens nach Anspruch 1, wenn das Programm durch einen Prozessor ausgeführt wird.

12. Rechnerprogramm, umfassend Programmanweisungen zum Implementieren eines Stromausfallwiederherstellungsverfahrens nach Anspruch 7, wenn das Programm durch einen Prozessor ausgeführt wird.

## Revendications

1. Procédé d'enregistrement de blocs de données sur un support d'enregistrement optique, ledit procédé comprenant les étapes consistant à:
- écrire une information d'indication d'enregistrement sur le support d'enregistrement optique pour indiquer qu'un enregistrement a commencé, ladite information d'indication d'enregistrement comprenant une adresse de début d'enregistrement,
- superposer l'information d'indication d'enregistrement à une fin de l'enregistrement.

2. Procédé d'enregistrement selon la revendication 1, comprenant encore l'étape consistant à écrire un en-tête de récupération pour chaque bloc qui est enregistré sur le support de données, l'en-tête de récupération d'un bloc actuel de données comprenant une taille du bloc actuel et un emplacement d'un bloc suivant de données.

3. Procédé d'enregistrement selon la revendication 2, dans lequel l'en-tête de récupération est écrit dans un train de données privées.

4. Procédé d'enregistrement selon la revendication 1, dans lequel l'information d'indication d'enregistrement est écrite dans une zone de données privées du support d'enregistrement.

5. Procédé d'enregistrement selon la revendication 1, dans lequel l'information d'indication d'enregistrement comprend un descripteur d'intégrité de volume logique.

6. Procédé d'enregistrement selon la revendication 1, dans lequel l'information d'indication d'enregistrement est stockée dans un fichier de récupération sur le disque.

7. Procédé de récupération de blocs de données qui sont enregistrées sur un support d'enregistrement optique dans le cas d'une panne de courant affectant un dispositif d'enregistrement et de reproduction contenant ledit support d'enregistrement optique, ledit procédé comprenant les étapes consistant à:
- lire une information d'indication d'enregistrement sur le support d'enregistrement optique, ladite information indiquant qu'un enregistrement a été arrêté d'une manière peu appropriée et incluant une adresse de début d'enregistrement, et
- analyser des données enregistrées à partir de l'adresse de début d'enregistrement afin de découvrir un point final d'enregistrement dans un bloc de données qui sont enregistrées en dernier lieu.

8. Procédé de récupération de panne de courant selon la revendication 7, comprenant encore les étapes consistant à:
- lire, sur le support d'enregistrement optique, un en-tête de récupération qui est associé à un bloc de données enregistrées, et
- récupérer un contenu d'un bloc de données enregistrées actuelles et un emplacement d'un bloc de données enregistrées suivantes à partir d'une taille de bloc actuelle et d'un pointeur de bloc suivant qui est contenu dans l'en-tête de récupération.

9. Dispositif d'enregistrement et/ou de reproduction comprenant:
- des moyens pour écrire une information d'indication d'enregistrement sur le support d'enregistrement optique pour indiquer qu'un enregistrement a commencé, ladite information d'indication d'enregistrement incluant une adresse de début d'enregistrement,
- des moyens pour superposer l'information d'indication d'enregistrement à une fin d'enregistrement.

10. Dispositif d'enregistrement et/ou de reproduction comprenant:
- des moyens pour lire une information d'indication d'enregistrement sur le support d'enregistrement, ladite information d'indication d'enregistrement indiquant qu'un enregistrement a été arrêté d'une manière peu appropriée et incluant une adresse de début d'enregistrement, et
- des moyens pour analyser des données enregistrées à partir de l'adresse de début d'enregistrement afin de découvrir un point final d'enregistrement dans un bloc de données qui sont enregistrées en dernier lieu.

11. Programme informatique comprenant des instructions de programme pour mettre en oeuvre un procédé d'enregistrement selon la revendication 1 lorsque ledit programme est exécuté par un processeur.

12. Programme informatique comprenant des instructions de programme pour mettre en oeuvre un procédé de récupération de panne de courant selon la revendication 7 lorsque ledit programme est exécuté par un processeur.
